# FASCICULE DE BREVET EUROPEEN

(11) **EP 0 972 930 B1**
(45) Date de publication et mention de la délivrance du brevet: **13.10.2004**
(21) Numéro de dépôt: 99401711.9
(22) Date de dépôt: 08.07.1999
(51) Int. Cl.: F02K 1/12, F02K 1/11, F02K 1/82

(54) **Tuyère bidimensionelle convergente à volets froids, translatables**
Zweidimensionale konvergierende Düse mit verschiebbaren kalten Klappen
Bidimensional convergent nozzle with translatable cold flaps

(30) Priorité: 17.07.1998 FR 9809128
(43) Date de publication de la demande: 19.01.2000
(73) Titulaire: Snecma Moteurs, 75015 Paris (FR)
(72) Inventeur: Bouiller, Philippe Pierre Vincent, 77210 Samoreau (FR); Bourquin, Pierre Yves, 75012 Paris (FR); Cot, Fabrice Michel Olivier, 77176 Savigny le Temple (FR); Kettler, Daniel, 77590 Chartrettes (FR); Ruis, Jean-Pierre, des Dames, 77820 Le Chatelet en Brie (FR)

(56) Documents cités:
- FR-A- 1 479 351
- FR-A- 2 602 274
- US-A- 4 641 782
- US-A- 4 878 617
- US-A- 4 993 641

## Description

L'invention concerne un ensemble d'éjection d'un flux gazeux pour une installation de propulsion par réaction équipant un avion, du type comprenant :
un conduit primaire terminé par une tuyère primaire convergente de laquelle s'échappe, en fonctionnement, un flux gazeux primaire, ladite tuyère comportant deux demi-coquilles constituant des volets chauds, lesdites demi-coquilles étant articulées sur des axes transversaux horizontaux, ayant une forme évolutive qui permet la transition entre une section d'entrée de tuyère adaptée au conduit primaire et une section d'éjection de tuyère de forme globalement elliptique ou rectangulaire en aval, et étant actionnés par des premiers moyens de commande, et un carénage formant le culot de l'avion, entourant le conduit primaire.

Un tel ensemble d'éjection est décrit dans le document FR-A-2 740 833. La tuyère primaire de type bidimensionnel permet d'aplatir le jet de gaz chauds à la sortie du moteur et de diminuer la signature infra-rouge.

Dans FR-A-2 740 833, le carénage formant le culot de l'avion, se prolonge vers l'arrière au-delà de l'orifice de sortie de la tuyère primaire et assure le continuité des formes aérodynamiques de l'avion. Ce carénage fixe se présente sous la forme d'une tuyère secondaire convergente-divergente à section fixe.

Or, les missiles, en particulier ceux qui sont guidés par infra-rouge, et les radars utilisés sur les avions d'armes sont de plus en plus perfectionnés tant sur le plan de la détection et du guidage que sur le plan de leur efficacité destructrice.

Cette sophistication croissante des missiles et des radars exige donc des concepteurs d'avions et de moteurs destinés aux armées de fournir des produits performants, mais aussi, et surtout, très manoeuvrants et discrets. Cette exigence de discrétion impose de réduire encore la signature infra-rouge du moteur.

L'invention s'est donné pour but de modifier la forme du culot de l'avion équipé d'une tuyère à paupières telle que décrite dans FR-2 740 833, afin de réduire encore la signature infra-rouge du moteur.

L'invention atteint son but par le fait que l'ensemble d'éjection proposé comporte en outre, en aval du carénage, une tuyère secondaire portée par le conduit primaire et susceptible d'être déplacée en translation par des seconds moyens de commande, ladite tuyère secondaire comportant des volets froids susceptibles d'être actionnés par des troisièmes moyens de commande indépendamment de la position angulaire des volets chauds.

La tuyère secondaire peut prendre deux positions extrêmes. Dans la position extrême avancée, les volets froids sont dans le prolongement du carénage de l'avion et assurent la continuité des formes aérodynamiques de l'avion. Dans la position extrême reculée, les volets froids masquent davantage le jet émis par la tuyère primaire et les volets chauds. Le choix entre ces deux positions extrêmes est fonction des missions dévolues à l'avion.

De préférence, la tuyère secondaire comporte deux volets froids en forme de paupières, articulés et soutenus par des axes transversaux horizontaux qui sont fixés sur deux glissières latérales montées coulissantes sur le conduit primaire et susceptibles d'être déplacées par les seconds moyens de commande.

Ces glissières sont guidées sur des galets solidaires du conduit primaire. Les seconds moyens de commande comportent des vérins télescopiques ancrés sur le conduit primaire et agissant sur les glissières.

La tuyère secondaire comporte, en outre, une virole annulaire portée par les glissières et susceptible de prendre une position escamotée dans le carénage de l'avion et une position "sortie" dans le prolongement du carénage en fonction de l'action des seconds moyens de commande. Cette virole annulaire supporte les troisièmes moyens de commande. Ces derniers comportent des vérins ancrés sur la virole annulaire et agissant sur les volets froids.

Avantageusement, le tuyère primaire comporte, en outre, des joues latérales ventilées.

D'autres avantages et caractéristiques de l'invention ressortiront à la lecture de la description suivante faite à titre d'exemple non limitatif et en référence aux dessins annexés dans lesquels :

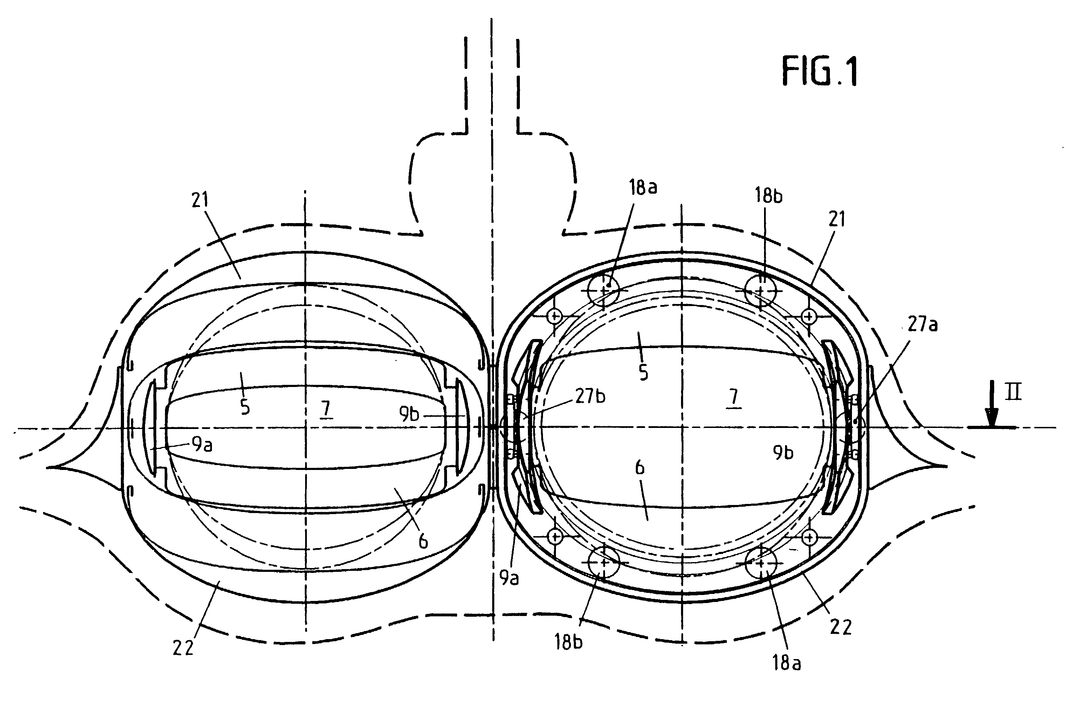

la figure 1 est une vue arrière d'un avion biréacteur dont les moteurs sont équipés d'un ensemble d'éjection conforme à l'invention, la demi-vue de gauche représente la tuyère primaire et la tuyère secondaire dans une position de fermeture maximum pour diminuer la signature infra-rouge et la demi-vue de droite montre la tuyère primaire et la tuyère secondaire dans la position d'ouverture maximum ;
la figure 2 est une coupe axiale selon un plan vertical de l'ensemble d'éjection selon l'invention, les volets froids étant reculés au maximum, et étant dans la position de masquage des volets chauds ;
la figure 3 est une coupe axiale selon un plan vertical de l'ensemble d'éjection selon l'invention, la tuyère secondaire étant avancée au maximum ;

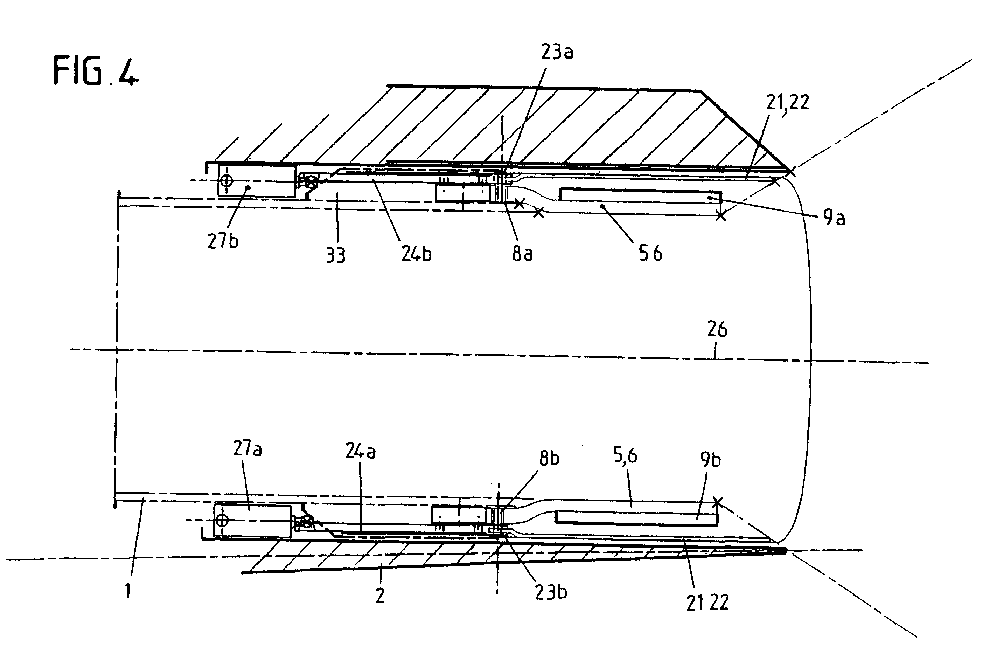

la figure 4 est une coupe selon un plan horizontal de l'ensemble d'éjection selon l'invention ;

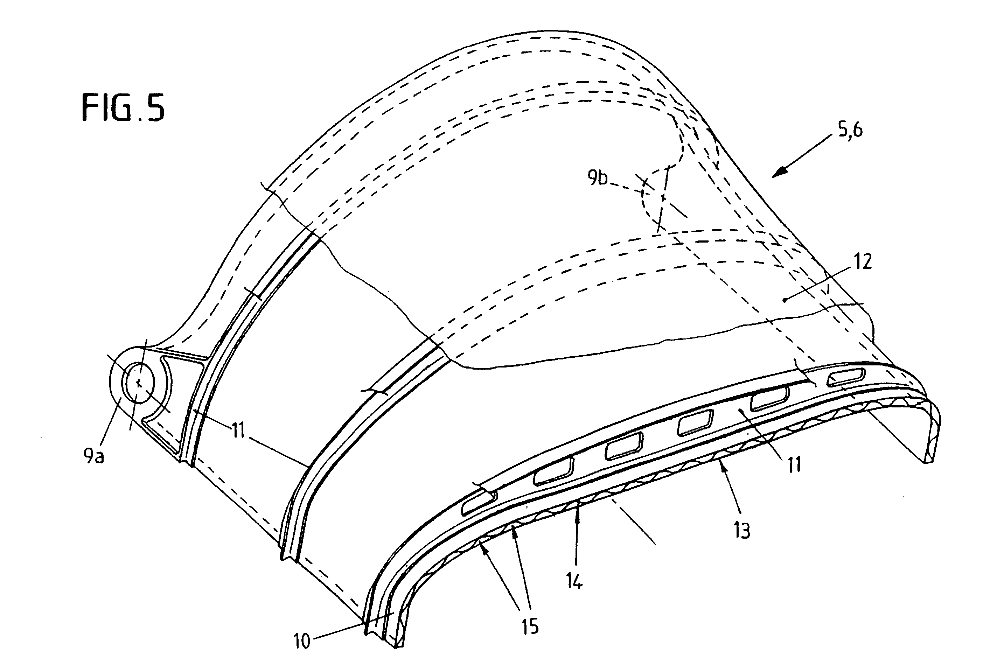

la figure 5 montre en perspective, et partiellement écorché, un volet chaud de l'ensemble d'éjection selon l'invention ;

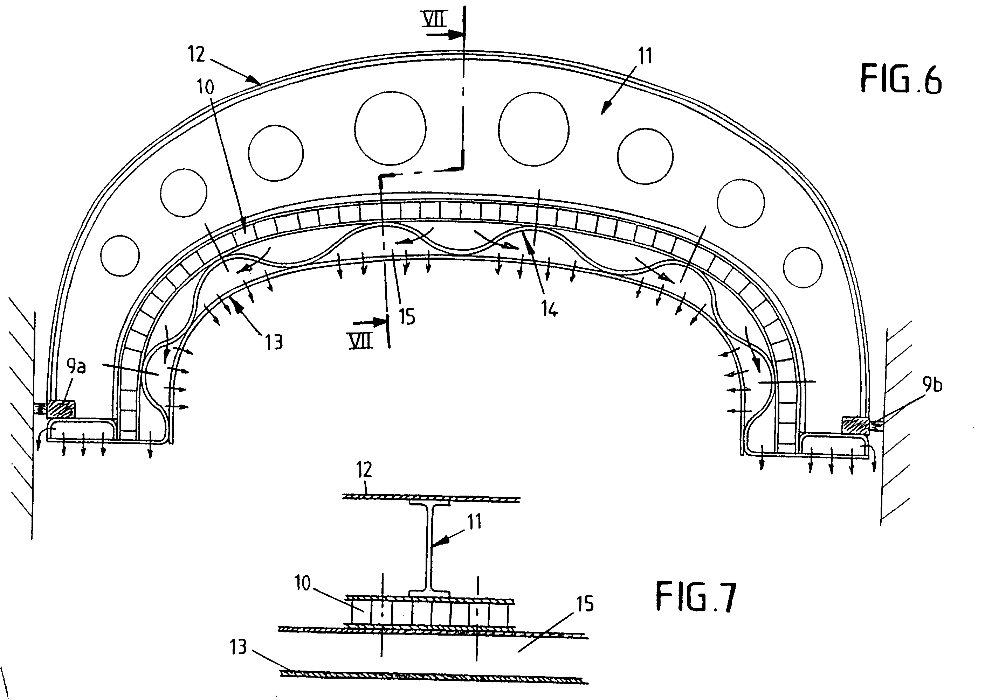

la figure 6 est une coupe transversale du volet chaud de la figure 5;

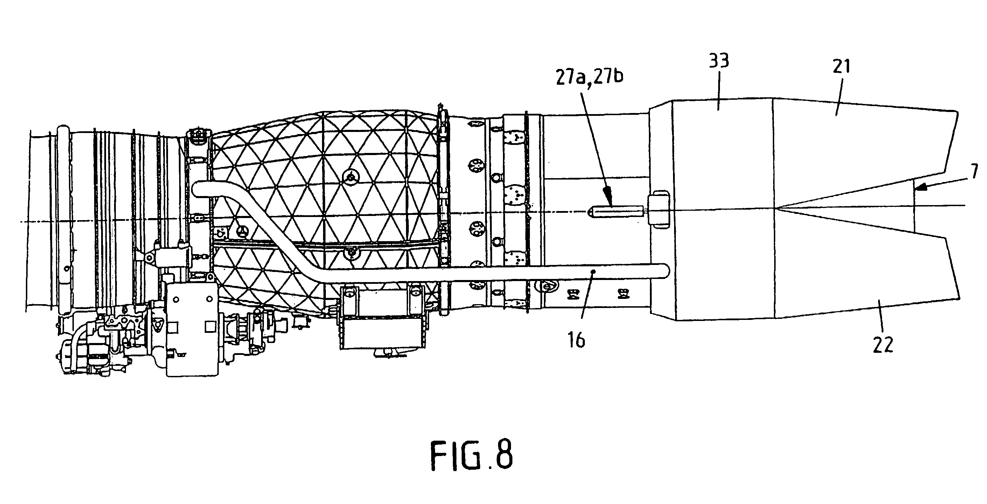

la figure 7 est une coupe selon la ligne VII-VII de la figure 6 d'un volet chaud ; et
la figure 8 est une vue latérale d'un turboréacteur muni de l'ensemble d'éjection selon l'invention.

La référence 1 représente un canal de post-combustion, formant un conduit primaire dans lequel circulent des gaz chauds issus de la turbine, et disposé dans le carénage arrière 2 d'un avion. Le canal de post-combustion 1 et le carénage 2 délimitent entre eux un canal secondaire 2a dans lequel peut circuler un flux gazeux secondaire servant au refroidissement du canal de post-combustion 1. Le carénage 2 s'étend approximativement jusqu'au plan de la sortie 3 du canal de post-combustion 1.

Une tuyère primaire convergente 4 du type bidimensionnel est disposée à l'extrémité aval du canal de post-combustion 1. Cette tuyère primaire 4 comporte deux volets chauds 5 et 6 dont le forme évolutive permet d'obtenir une section quasi elliptique, voire rectangulaire à la sortie 7 de la tuyère primaire 4. Les volets 5, 6 ont des formes de demi-coquilles ou paupières et sont articulés sur deux axes transversaux horizontaux 8a, 8b du canal de post-combustion 1. Leur forme évolutive permet la transition entre une section d'entrée de tuyère de forme circulaire en amont, adaptée à la forme de l'extrémité aval du canal de post-combustion et la section d'éjection 7 de forme elliptique, rectangulaire ou approchant.

Afin d'éviter un éclatement latéral du jet de gaz, la tuyère primaire 4 comporte, en outre, deux joues latérales 9a, 9b fixées au canal de post-combustion 1 et ventilées.

Les deux volets chauds 5, 6 de cette tuyère primaire 4 sont constitués d'une structure en titane qui comporte une cloison interne 10 en structure nids d'abeille qui est renforcée par un nervurage 11 et une peau externe 12 sans particularité. La protection thermique de cette structure est assurée par un matériau réfractaire "semi-sandwich" du type KCN22W, commercialement dénommé HA188. On y trouve une peau perméable 13 du type Lamilloy, ou multiperforée et une âme ondulée 14 qui constituent les canaux de ventilation 15 des volets chauds 5, 6. L'âme ondulée 14 permet aussi la fixation de la peau de protection thermique 13 sur la structure du volet correspondant.

La ventilation des volets chauds 5, 6 et des joues latérales 9a, 9b de la tuyère primaire 4 provient du flux secondaire du moteur qui est frais. Des canalisations 16 amènent ce débit d'air frais vers un collecteur structural 17 qui participe à la tenue mécanique du canal de post-combustion 1 et qui supporte les constituants de la tuyère primaire 4, c'est-à-dire les joues latérales 9a, 9b, les axes 8a, 8b et les deux volets chauds 5, 6.

Au niveau de la commande de position de la tuyère primaire 4, chaque volet chaud 5, 6 subit l'action de deux vérins simple corps 18a, 18b qui sont ancrés sur le canal de post-combustion 1.

Une tuyère secondaire 20 entourant la tuyère primaire 4 est prévue en aval du carénage 2 de l'avion. Cette tuyère secondaire 20 de type convergent comporte deux volets froids 21, 22 en forme de paupières, qui sont articulés et soutenus par deux axes transversaux horizontaux 23a, 23b. Ces deux axes 23a, 23b sont fixés sur deux glissières latérales 24a, 24b guidées sur des galets 25 solidaires du canal de post-combustion 1. Les deux glissières latérales 24a, 24b sont susceptibles d'être déplacées parallèlement à l'axe 26 du canal de post-combustion par deux vérins télescopiques 27a, 27b, ancrés sur le canal de post-combustion 1.

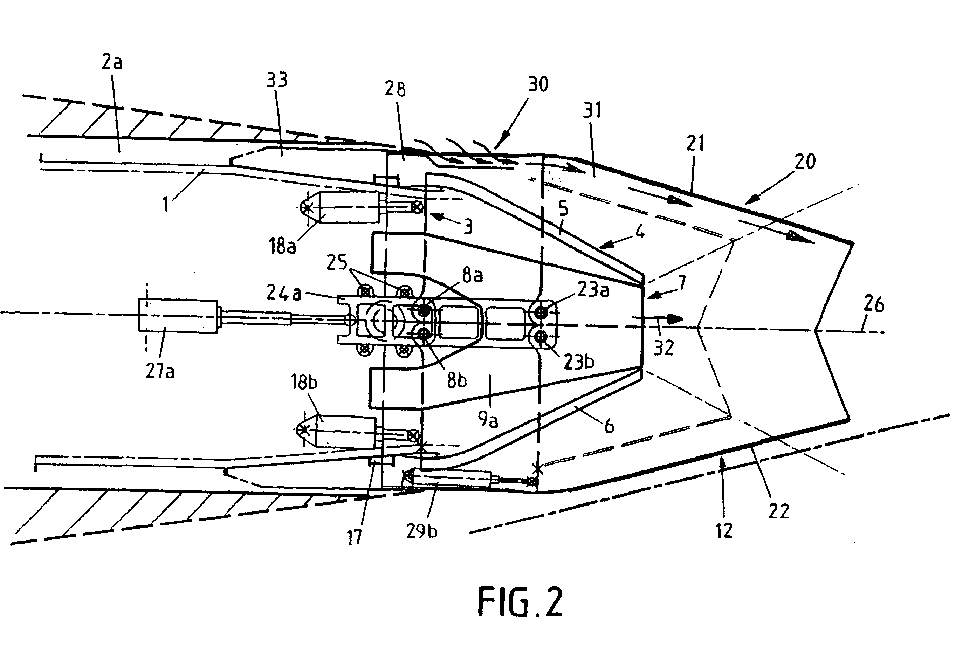

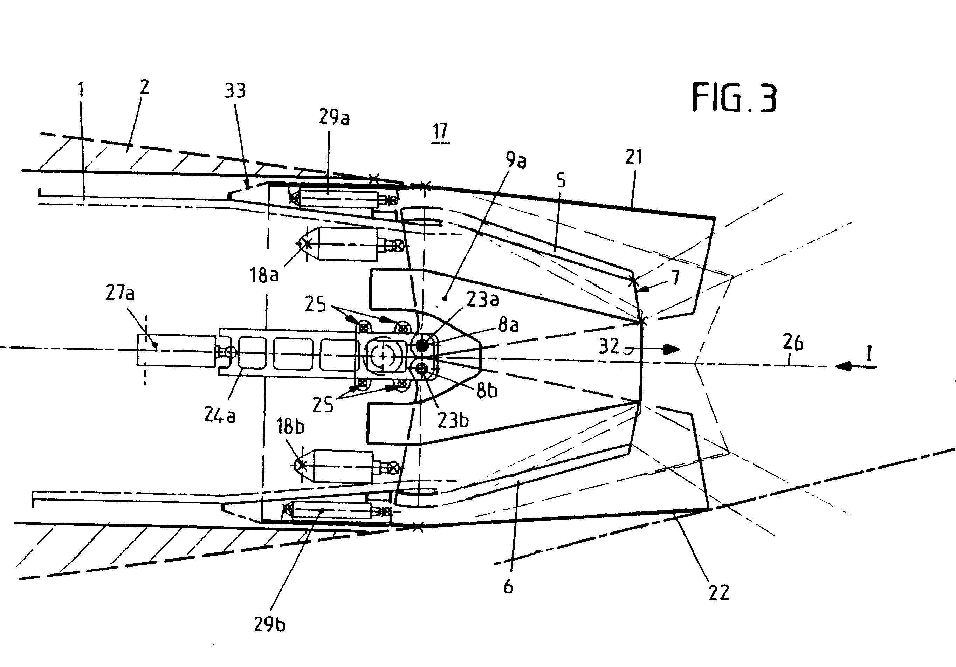

Les deux glissières latérales 24a, 24b portent une virole annulaire 28 qui entoure le canal de post-combustion 1 et est susceptible de prendre une position escamotée (voir figure 3) dans le carénage 2 de l'avion et une position "sortie" (voir figure 2), dans laquelle la virole annulaire 28 est dans le prolongement du carénage 2 et dans laquelle les volets froids 21, 22 sont situés en aval du carénage 2.

Des vérins de commande 29a, 29b ancrés sur la virole annulaire 28 permettent de faire pivoter les volets froids 21, 22 autour de leurs axes d'articulation 23a, 23b sur les glissières 24a, 24b indépendamment de la position angulaire des volets chauds 5, 6.

Lorsque la virole annulaire 28 est dans la position extrême arrière, les volets froids 21, 22 constituent un capotage qui camoufle les volets chauds 5, 6.

La virole annulaire 28 comporte avantageusement des écopes 30 qui peuvent diriger un débit d'air extérieur froid 31 à l'intérieur de la tuyère secondaire 20. Ce débit d'air extérieur froid 31 permet de ventiler les volets froids 21, 22 en refroidissant leur face interne, et se mélange au jet de gaz 32 sortant de la tuyère primaire 4 pour faire décroître la température du jet de gaz 32 et ainsi diminuer la signature infra-rouge.

Cette manoeuvre d'écopage n'est possible que lorsque les volets froids 21, 22 sont dans la position arrière.

La forme extérieure des volets froids 21, 22 est assujettie à la forme arrière du fuselage de l'avion. Une virole fixe 33, disposée dans le canal secondaire 2a, réalise l'interface entre la virole annulaire mobile 28 et le carénage 2 de l'avion.

Pour ce qui concerne les organes de réglage, des servovalves, associées à des capteurs de position, assureront la commande de la synchronisation des mouvements des différents vérins.

L'ensemble d'éjection proposé permet d'obtenir de nombreux avantages sur le plan de la signature infra-rouge et au niveau du bilan de traînée aérodynamique de l'avion.

Sur le plan de la signature infra-rouge, le masquage multidirectionnel du jet est assuré par les volets froids 21, 22 en position arrière. Le choix entre la position avancée et la position arrière des volets froids 21, 22 se fait en fonction des missions de l'avion. En position arrière des volets froids 21, 22, l'écopage de l'air froid externe permet de diminuer la signature infra-rouge.

Au niveau du bilan de traînée aérodynamique de l'avion, la commande séparée des volets froids 21, 22 et des volets chauds 5, 6 permet d'optimiser la traînée aérodynamique de l'avion, car en phase de vol supersonique, il est possible de laisser les volets froids 21, 22 dans la position avancée qui assure la continuité aérodynamique avec le culot de l'avion. On évite ainsi d'accrocher une onde de choc au niveau de leur raccordement. La vectorisation de la poussée suivant l'axe de tangage est possible en agissant sur les lois de régulation des vérins.

## Revendications

1. Ensemble d'éjection d'un flux gazeux pour une installation de propulsion par réaction équipant un avion, du type comprenant :
un conduit primaire (1) terminé par une tuyère primaire (4) convergente de laquelle s'échappe, en fonctionnement, un flux gazeux (32) primaire, ladite tuyère primaire (4) comportant deux demi-coquilles (5, 6) constituant des volets chauds, lesdites demi-coquilles (5, 6) étant articulées sur des axes transversaux horizontaux (8a, 8b), ayant une forme évolutive qui permet la transition entre une section d'entrée de tuyère adaptée au conduit primaire (1) et une section d'éjection (7) de tuyère de forme globalement elliptique ou rectangulaire en aval, et étant actionnés par des premiers moyens de commande (18a, 18b), et un carénage (2) formant le culot de l'avion, entourant le conduit primaire (1),
**caractérisé par le fait que** ledit ensemble comporte en outre, en aval du carénage (2), une tuyère secondaire (20) portée par le conduit primaire (1) et susceptible d'être déplacée en translation par des seconds moyens de commande (27a, 27b), ladite tuyère secondaire (20) comportant des volets froids (21, 22) susceptibles d'être actionnés par des troisièmes moyens de commande (29a, 29b) indépendamment de la position angulaire des volets chauds (5, 6).

2. Ensemble selon la revendication 1, **caractérisé par le fait que** la tuyère secondaire (20) comporte deux volets froids (21, 22) en forme de paupières, articulés et soutenus par des axes transversaux horizontaux (23a, 23b) qui sont fixés sur deux glissières latérales (24a, 24b) montées coulissantes sur le conduit primaire (1) et susceptibles d'être déplacées par les seconds moyens de commande (27a, 27b).

3. Ensemble selon la revendication 2, **caractérisé par le fait que** les glissières (24a, 24b) sont guidées sur des galets (25) solidaires du conduit primaire (1).

4. Ensemble selon l'une quelconque des revendications 2 ou 3, **caractérisé par le fait que** les seconds moyens de commande (27a, 27b) comportent des vérins télescopiques ancrés sur le conduit primaire (1) et agissant sur les glissières (24a, 24b).

5. Ensemble selon l'une quelconque des revendications 2 à 4, **caractérisé par le fait que** la tuyère secondaire (20) comporte, en outre, une virole annulaire (28) portée par les glissières (24a, 24b) et susceptible de prendre une position escamotée dans le carénage (2) de l'avion et une position "sortie" dans le prolongement du carénage (2) en fonction de l'action des seconds moyens de commande (27a, 27b).

6. Ensemble selon la revendication 5, **caractérisé par le fait que** la virole annulaire (28) supporte les troisièmes moyens de commande (29a, 29b).

7. Ensemble selon la revendication 6, **caractérisé par le fait que** les troisièmes moyens de commande (29a, 29b) comportent des vérins.

8. Ensemble selon l'une quelconque des revendications 5 à 7, **caractérisé par le fait que** la virole annulaire (28) comporte des écopes (30) pour diriger un débit d'air froid prélevé à l'extérieur dans la tuyère secondaire (20).

9. Ensemble selon l'une quelconque des revendications 1 à 8, **caractérisé par le fait que** la tuyère primaire (4) comporte, en outre, des joues latérales (9a, 9b) ventilées.

## Patentansprüche

1. Vorrichtung zum Ausstoßen eines Gasstroms für eine Rückstoß-Antriebseinrichtung eines Flugzeugs, die eine Primärleitung (1) umfasst, die mit einer konvergierenden Primärdüse (4) endet, aus der im Betrieb ein Primärgasstrahl (32) austritt, wobei diese Düse (4) aus zwei Halbschalen (5, 6) besteht, die heiße Klappen bilden, wobei diese Halbschalen (5, 6) auf horizontalen, quer verlaufenden Achsen (8a, 8b) angelenkt sind, eine sich entwickelnde Form aufweisen, die den Übergang von einem an die Primärleitung (1) angepassten Eintrittsquerschnitt zu einem hinteren Düsenausstoßquerschnitt (7) von allgemein elliptischer oder rechtwinkliger Form ermöglicht, und durch erste Steuermittel (18a, 18b) betätigt werden, sowie eine Verkleidung (2) umfasst, die das Gehäuse des Flugzeugs bildet, das die Primärleitung (1) umgibt,
**dadurch gekennzeichnet,**
**dass** diese Vorrichtung ferner hinter der Verkleidung (2) eine Nebendüse (20) aufweist, die von der Primärleitung (1) gehalten wird und durch zweite Steuermittel (27a, 27b) verschoben werden kann, wobei diese Nebendüse (20) kalte Klappen (21, 22) aufweist, die durch dritte Steuermittel (29a, 29b) unabhängig von der Winkelstellung der heißen Klappen (5, 6) betätigt werden können.

2. Vorrichtung nach Anspruch 1,
**dadurch gekennzeichnet,**
**dass** die Nebendüse (20) zwei kalte Klappen (21, 22) in Form von Klappschalen aufweist, die angelenkt an horizontalen, quer verlaufenden Achsen (23a, 23b) sitzen, welche an zwei seitlichen Gleitschienen (24a, 24b) befestigt sind, die gleitend auf der Primärleitung (1) angebracht sind und durch die zweiten Steuermittel (27a, 27b) verschoben werden können.

3. Vorrichtung nach Anspruch 2,
**dadurch gekennzeichnet,**
**dass** die Gleitschienen (24a, 24b) auf Rollen (25) geführt werden, die mit der Primärleitung (1) fest verbunden sind.

4. Vorrichtung nach einem der Ansprüche 2 oder 3,
**dadurch gekennzeichnet,**
**dass** die zweiten Steuermittel (27a, 27b) Teleskopzylinder aufweisen, die an der Primärleitung (1) verankert sind und auf die Gleitschienen (24a, 24b) einwirken.

5. Vorrichtung nach einem der Ansprüche 2 bis 4,
**dadurch gekennzeichnet,**
**dass** die Nebendüse (20) ferner einen Ring (28) aufweist, der von den Gleitschienen (24a, 24b) gehalten wird und eine in die Flugzeugverkleidung (2) eingezogene Stellung und eine ausgefahrene Stellung in der Verlängerung der Verkleidung (2) einnehmen kann, je nach Betätigung der zweiten Steuermittel (27a, 27b).

6. Vorrichtung nach Anspruch 5,
**dadurch gekennzeichnet,**
**dass** an diesem Ring (28) die dritten Steuermittel (29a, 29b) sitzen.

7. Vorrichtung nach Anspruch 6,
**dadurch gekennzeichnet,**
**dass** die dritten Steuermittel (29a, 29b) aus Zylindern bestehen.

8. Vorrichtung nach einem der Ansprüche 5 bis 7,
**dadurch gekennzeichnet,**
**dass** der Ring (28) Schöpfer (30) aufweist, um ein Quantum kalter Luft von draußen in die Nebendüse (20) zu leiten.

9. Vorrichtung nach einem der Ansprüche 1 bis 8,
**dadurch gekennzeichnet,**
**dass** die Primärdüse (4) ferner belüftete Seitenwangen (9a, 9b) aufweist.

## Claims

1. Gas stream ejection assembly for a jet propulsion unit with which an aircraft is equipped, of the type comprising:
a primary duct (1) terminating in a convergent primary nozzle (4) through which, in operation, a primary gas stream (32) is exhausted, the said primary nozzle (4) comprising two half-shells (5, 6) constituting hot flaps, the said half-shells (5, 6) being articulated on horizontal transverse spindles (8a, 8b), having an adaptable shape that allows a transition between a nozzle intake section matched to the primary duct (1) and a nozzle ejection section (7) of generally elliptical or rectangular shape downstream, which half-shells are actuated by first drive means (18a, 18b), and a fairing (2) forming the base of the aircraft, surrounding the primary duct (1),
**characterized in that** the said assembly furthermore includes, downstream of the fairing (2), a secondary nozzle (20) supported by the primary duct (1) and capable of being moved translationally by second drive means (27a, 27b), the said secondary nozzle (20) having cold flaps (21, 22) that can be actuated by third drive means (29a, 29b) independently of the angular position of the hot flaps (5, 6).

2. Assembly according to Claim 1, **characterized in that** the secondary nozzle (20) has two cold flaps (21, 22) in the form of eyelids, which are articulated and supported by horizontal transverse spindles (23a, 23b) which are fixed to two lateral slides (24a, 24b) that are mounted so as to slide along the primary duct (1) and are capable of being moved by the second drive means (27a, 27b).

3. Assembly according to Claim 2, **characterized in that** the slides (24a, 24b) are guided over rolls (25) fastened to the primary duct (1).

4. Assembly according to either of Claims 2 and 3, **characterized in that** the second drive means (27a, 27b) comprise telescopic jacks anchored to the primary duct (1) and acting on the slides (24a, 24b).

5. Assembly according to any one of Claims 2 to 4, **characterized in that** the secondary nozzle (20) furthermore includes an annular shell (28) supported by the slides (24a, 24b) and capable of adopting a retracted position in the fairing (2) of the aircraft and a (deployed) position along the extension of the fairing (2) depending on the action of the second drive means (27a, 27b).

6. Assembly according to Claim 5, **characterized in that** the annular shell (28) supports the third drive means (29a, 29b).

7. Assembly according to Claim 6, **characterized in that** the third drive means (29a, 29b) are jacks.

8. Assembly according to any one of Claims 5 to 7, **characterized in that** the annular shell (28) has scoops (30) for directing a flow of cold air taken from the outside into the secondary nozzle (20).

9. Assembly according to any one of Claims 1 to 8, **characterized in that** the primary nozzle (4) furthermore includes ventilated flanges (9a, 9b).
